# FASCICULE DE BREVET EUROPEEN

(11) **EP 3 428 055 B1**
(45) Date de publication et mention de la délivrance du brevet: **26.08.2020**
(21) Numéro de dépôt: 17305905.6
(22) Date de dépôt: 11.07.2017
(51) Int. Cl.: G01L 5/12, B63H 5/125

(54) **PROCÉDÉ ET DISPOSITIF DE DÉTERMINATION DE LA DIRECTION ET DE L'AMPLITUDE D'UN EFFORT APPLIQUÉ SUR UNE NACELLE DE PROPULSION POUR BATEAU**
VERFAHREN UND VORRICHTUNG ZUR BESTIMMUNG DER RICHTUNG UND AMPLITUDE EINER ANGELEGTEN KRAFT AUF EINE ANTRIEBSGONDEL FÜR EIN BOOT
METHOD AND DEVICE FOR DETERMINING THE DIRECTION AND THE AMPLITUDE OF A FORCE APPLIED TO A PROPULSION POD OF A BOAT

(43) Date de publication de la demande: 16.01.2019
(73) Titulaire: AETC SAPPHIRE, Saint Petersburg 191014 (RU)
(72) Inventeur: BRY, Jean-Jacques, 54250 CHAMPIGNEULLES (FR); VINCENT, Loic, 90000 BELFORT (FR); JULLIAND, Lionel, 90000 BELFORT (FR); HUMBERT, Pierre, 54250 CHAMPIGNEULLES (FR); HEMMELMANN, Jan, 85748 GARCHING BEI MÜNCHEN (DE)
(74) Mandataire: Casalonga

(56) Documents cités:
- EP-A1- 3 085 508
- WO-A1-2016/091597
- WO-A1-2016/198731

## Description

La présente invention concerne un dispositif et un procédé de détermination de l'amplitude et de la direction d'un effort appliqué sur une nacelle de propulsion pour bateau, également connue sous la dénomination anglo-saxonne « propulsion oriented drive », ou « POD ».

On entend, par bateau, dans le cadre de la présente description, tout type d'engin ou embarcation flottante motorisée destinée à la navigation.

Un bateau peut être équipé d'une ou plusieurs nacelles de propulsion disposées partiellement dans sa coque et dont une partie est immergée. Un procédé et un dispositif similaires sont connus du document EP3085508.

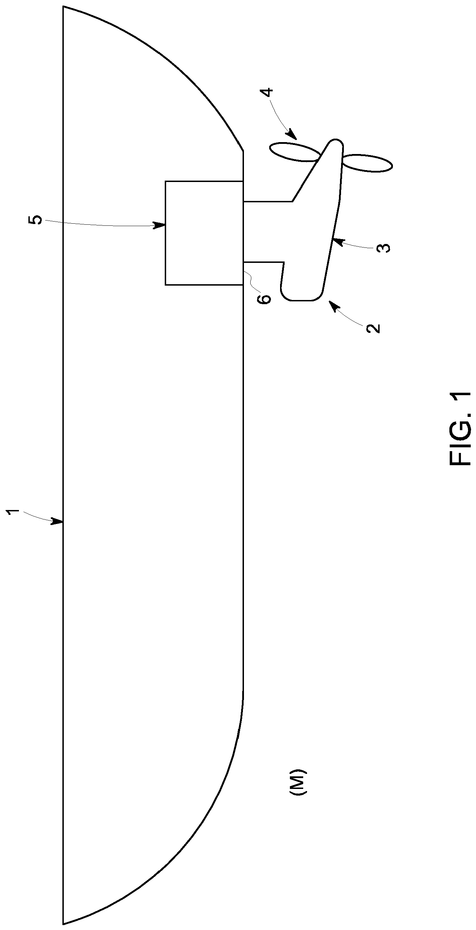

La figure 1 illustre une coque de bateau 1 comprenant une nacelle de propulsion 2 pour bateau immergée dans l'eau, par exemple la mer (M).

La nacelle de propulsion 2 comprend un carter mobile 3 immergé, une hélice de propulsion 4 reliée au carter mobile 3 par l'intermédiaire d'un arbre de rotation et un dispositif d'orientation 5 placé dans la coque du bateau.

Le carter mobile 3 embarque un moteur de propulsion entraînant l'hélice de propulsion 4. Le carter mobile 3 est relié au dispositif d'orientation 5 par l'intermédiaire d'une liaison pivot 6. Le dispositif 5 comprend un dispositif d'entraînement permettant d'orienter le carter mobile 3, et ainsi modifier la direction de propulsion de l'hélice de propulsion 4.

Comme le carter mobile 3 est immergé, il est soumis à des contraintes résultant notamment de chocs avec des corps solides flottant, tels que des icebergs dans le cas d'un bateau brise-glace.

Afin de prévoir les opérations de maintenance et également de renseigner le capitaine du bateau sur l'état de la nacelle de propulsion, il est nécessaire d'estimer les dommages subis. En d'autres termes, il est nécessaire d'estimer les caractéristiques des chocs subis par la nacelle de propulsion. Il est à cet effet nécessaire de connaître la direction de chaque choc et d'estimer leur amplitude.

Dans le but de déterminer les dommages subis par une nacelle de propulsion lors de son utilisation, une solution consiste à équiper le carter mobile de la nacelle de propulsion de capteurs de contrainte.

Cependant, pour que les mesures effectuées par les capteurs de contrainte soient précises, les capteurs de contrainte doivent recouvrir l'ensemble de la surface du carter mobile. De plus, chaque capteur doit être étalonné selon sa position sur le carter mobile.

Une grande quantité de capteurs de contrainte est donc nécessaire, et leur mise en œuvre est fastidieuse. Chaque capteur doit en effet être fixé au carter et calibré.

Au vu de ce qui précède, il est proposé de pallier les inconvénients liés à la détermination des caractéristiques des chocs subis par la nacelle de propulsion à partir des capteurs de contrainte placé sur l'ensemble de la surface du carter mobile.

Il est donc proposé, selon un aspect, un procédé de détermination de la direction et de l'amplitude d'un effort appliqué sur un système comprenant une partie fixe et une partie mobile déformable sous l'effet dudit effort.

Selon un mode de mise en œuvre, on mesure des déformations mécaniques s'appliquant sur la partie mobile sous l'effet dudit effort en mesurant une distance entre la partie fixe et la partie mobile dans la direction d'application de l'effort, et on traite les mesures de distance pour déterminer l'amplitude et la direction de l'effort.

Selon l'invention, la direction de l'effort est déterminée à partir de la position d'au moins un capteur de mesure délivrant une valeur de mesure extrême par rapport à des valeurs de mesure respectivement fournies par un ensemble de capteurs de mesure répartis angulairement mesurant le déplacement de la partie mobile par rapport à la partie fixe.

Avantageusement, l'amplitude de l'effort est déterminée à partir d'un ensemble de mesures de distance prédéterminées en fonction de valeurs d'effort.

De préférence, les mesures de distance varient linéairement en fonction des valeurs d'effort.

Selon un autre mode de mise en œuvre, le procédé comprend une étape de calcul par une méthode d'éléments finis.

De préférence, le procédé comprend une étape de mesure d'effort et de déplacement réalisées sur un banc d'essai.

Selon un autre aspect, il est proposé un dispositif de détermination de la direction et de l'amplitude d'un effort appliqué sur un système comprenant une partie fixe et une partie mobile déformable sous l'effet dudit effort.

Selon un mode de réalisation, le dispositif comprend des moyens de mesure des déformations mécaniques de la partie mobile, comprenant des moyens de mesure de distance entre la partie mobile et la partie fixe, dans la direction d'application de l'effort et des moyens de traitement aptes à déterminer l'amplitude et la direction de l'effort à partir des mesures délivrées par les moyens de mesure.

Avantageusement, les moyens de mesure comprennent un ensemble de capteurs de mesure répartis angulairement autour de la partie mobile.

De préférence, les capteurs de mesure sont montés sur une partie cylindrique des parties fixe et mobile.

Selon l'invention, les moyens de traitement sont adaptés pour déterminer la direction de l'effort à partir de la position d'au moins un capteur délivrant une valeur de mesure extrême par rapport aux valeurs fournies par les autres capteurs.

Avantageusement, les moyens de traitement comprennent des moyens de mémorisation dans lesquels sont stockées un ensemble de valeurs de mesure de distance prédéterminées en fonction de valeurs d'efforts, les moyens de traitement étant adaptés pour déterminer l'amplitude de l'effort à partir de mesures délivrées par les capteurs.

De préférence, les moyens de mémorisation mémorisent les valeurs de direction et d'amplitude d'un effort que si la valeur d'amplitude est supérieure à un seuil.

Avantageusement, les parties déformable et fixe sont de forme cylindrique.

Selon un autre aspect, une nacelle de propulsion pour bateau comprend un dispositif de détermination de la direction et de l'amplitude d'un effort sur ladite nacelle tel que défini précédemment.

D'autres buts, caractéristiques et avantages de l'invention apparaîtront à la lecture de la description suivante, donnée uniquement à titre d'exemple non limitatif, et faite en référence aux dessins annexés sur lesquels :
- la figure 1, dont il a déjà été fait mention, illustre schématiquement une coque de bateau dotée d'une nacelle de propulsion ;
- les figures 2 et 3 illustrent une nacelle de propulsion dotée d'un dispositif de mesure de chocs selon un mode de réalisation de l'invention, respectivement en vue de profil et de dessus ;
- les figures 4 et 5 sont des vues de profil et de dessus de la nacelle de propulsion des figures 2 et 3, illustrant le comportement de la nacelle et de son dispositif de mesure de chocs lors d'un choc ;
- la figure 6 montre des valeurs mesurées par les capteurs de déformation de la nacelle de propulsion selon le temps, lors d'un choc; et
- la figure 7 montre des valeurs mesurées par les capteurs de déformation de la nacelle de propulsion selon leur position angulaire lors d'un choc.

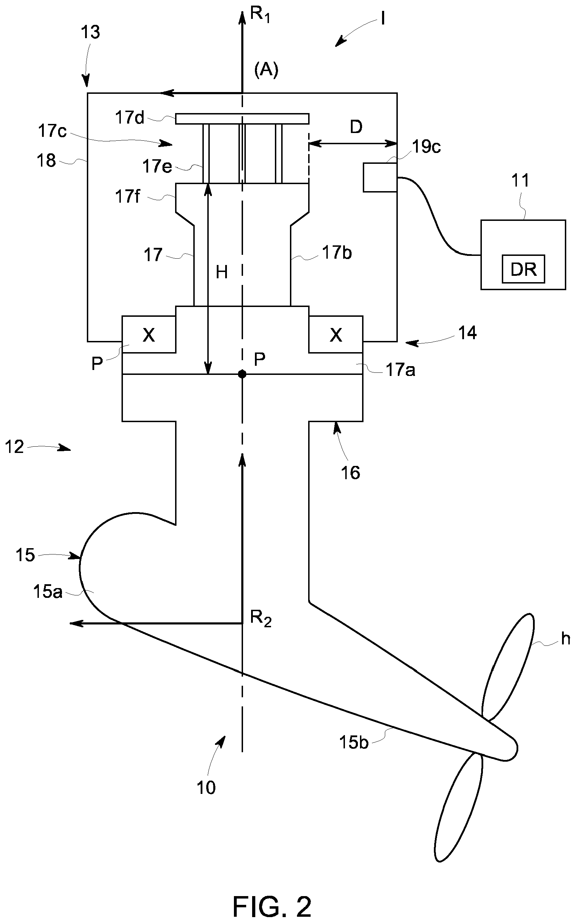

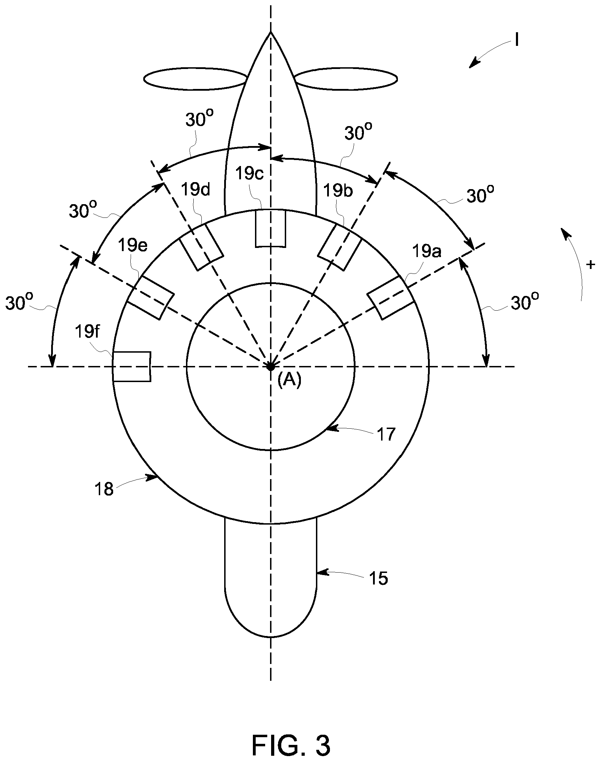

On se réfèrera aux figures 2 et 3 qui illustrent une nacelle de propulsion 10 de bateau incorporant un dispositif I de détermination de caractéristiques des efforts s'appliquant sur la nacelle lors de la navigation du bateau. Ce dispositif est notamment destiné à déterminer la direction et l'amplitude des efforts appliqués sur la nacelle.

Comme on le voit, la nacelle de propulsion, qui est montée sous la carène du bateau, comprend une partie mobile 12 comprenant intérieurement un moteur électrique entraînant une hélice h et une partie fixe 13 fixée à la carène du bateau et auquel est reliée la partie mobile 12 par l'intermédiaire d'une liaison pivot 14. La partie mobile 12 est orientable par rapport à la partie fixe 13 autour d'un axe de rotation A perpendiculaire à l'axe longitudinal du bateau, avantageusement selon un angle de révolution proche ou égal à 180°. Un repère R1 est attaché à la partie fixe 13 et un repère R2 est attaché à la partie mobile 12. La nacelle 10 est montée par la partie fixe 13 sous la carène du bateau de sorte que la partie mobile 12 s'étende à l'extérieur et soit immergée pour propulser le bateau. Les chocs engendrés lors de la navigation s'appliquent dès lors sur la partie mobile 12, et en particulier, essentiellement sur la partie avant, en considérant le sens de déplacement du bateau, et latéralement.

La partie mobile 12 comprend un carter mobile 15 comprenant un bulbe avant 15a, une partie arrière effilée 15b sur laquelle est montée l'hélice de propulsion h et une jambe de fixation 16 intermédiaire, dont l'axe est confondu avec l'axe de rotation A, assurant la fixation de la partie mobile 12 sur la partie fixe 13 par l'intermédiaire de la liaison pivot 14. La liaison pivot incorpore à cet effet un pallier étanche P traversant la coque du bateau et fixé à la partie fixe 13.

La partie fixe 13 comprend un carter fixe 18 cylindrique installé dans la coque du bateau et dans lequel est placé un diffuseur d'air 17 canalisant un flux d'air de refroidissement vers le moteur électrique embarqué dans la partie mobile 12.

Comme le montre la figure 2, le diffuseur d'air 17 est globalement cylindrique. Il comprend une embase 17a solidaire de la jambe de fixation 16, surmontée d'une colonne intermédiaire 17b elle-même surmontée d'une tête 17c ajourée. Le diffuseur, y compris l'embase 17a et la colonne intermédiaire 17b, comporte un passage axial interne pour conduire l'air de refroidissement vers le moteur. L'embase 17a comprend à cet effet des ailettes internes destinées à canaliser l'air de refroidissement vers le moteur.

Le diffuseur d'air 17 assure par ailleurs le guidage de câbles électriques d'alimentation reliés au moteur électrique situé dans la nacelle de propulsion 10 et entraînant l'hélice h.

La tête 17c comporte à cet égard un plateau supérieur 17d reposant sur des pieds 17e dans lesquels cheminent les câbles d'alimentation.

La partie intermédiaire 17b comprend une extrémité cylindrique 17f opposée à l'embase 17a, de diamètre accru.

L'ensemble comprenant l'embase 17a surmontée de la colonne intermédiaire 17b a une hauteur H.

Le dispositif I de détermination des caractéristiques des efforts s'appliquant sur la nacelle comprend un organe 19 de mesure de la déformation mécanique de la nacelle. L'organe 19 est notamment destiné à mesurer le déplacement de la partie mobile 12 par rapport à la partie fixe 13 lors de la déformation mécanique de la nacelle. Le dispositif I comprend également une unité de traitement 11 apte à déterminer l'amplitude et la direction des efforts à partir des mesures délivrées par l'organe de mesure 19.

Par exemple l'unité de traitement est réalisée à partir d'un microprocesseur. Mais il peut s'agir de tout dispositif apte à déterminer l'amplitude et la direction de l'effort à partir des mesures délivrées par l'organe de mesure 19. Il peut s'agir notamment d'un micro contrôleur.

L'organe de mesure 19 permet de déterminer une distance D entre l'extrémité cylindrique 17f de la colonne intermédiaire 17b opposée à l'embase 17a du diffuseur d'air 17 et le carter fixe 18 projeté dans un plan perpendiculaire à l'axe A.

L'organe de mesure 19 comprend un ensemble de capteurs de mesure. Dans cet exemple de mode de réalisation du dispositif, l'organe de mesure 19 comprend six capteurs 19a, 19b, 19c, 19d, 19e et 19f tous identiques montés sur le carter fixe 18 et tournés vers le diffuseur 17. Ils sont avantageusement positionnés de manière à pointer vers la surface cylindrique 17f.

Les capteurs sont montés sur une partie de forme cylindrique du carter fixe 18.

Les capteurs de mesure sont par exemple des capteurs sans contact réalisés à partir de capteurs à ultrasons. On pourrait également, en variante, réaliser ces capteurs à partir de capteurs optiques.

Les capteurs de mesure sont disposés de telle sorte qu'ils mesurent la distance D entre la surface extérieure de la surface cylindrique de l'extrémité 17d de la colonne intermédiaire 17b du diffuseur d'air 17 à son extrémité opposée au carter mobile 15, et le carter fixe 18. En d'autres termes, chaque capteur 19a, 19b, 19c, 19d, 19e et 19f mesure une distance entre l'extrémité de la surface cylindrique 17d opposée à la liaison pivot 14 et la partie fixe 13 projetée dans un plan perpendiculaire à l'axe de rotation (A) de la partie déformable 12 par rapport à la partie fixe 13.

Les capteurs de mesure 19a, 19b, 19c, 19d, 19e et 19f sont angulairement répartis de manière régulière par rapport à l'axe A sur un demi-périmètre du carter fixe 18 tourné vers l'hélice, comme illustré à la figure 3. La position de chaque capteur de mesure est connue et référencée. Comme le diffuseur d'air 17 et le carter fixe 18 sont cylindriques, en étant montés mobile en rotation l'un par rapport à l'autre selon un débattement angulaire de l'ordre de 180°, il suffit d'équiper un seul demi-périmètre du carter de capteurs de déformation pour mesurer le déplacement du diffuseur 17 par rapport au carter fixe 18, quelle que soit sa position angulaire.

Le nombre de capteurs de mesure nécessaires est ainsi réduit.

Dans le mode de réalisation illustré, l'organe de mesure 19 comprend six capteurs de mesure 19a, 19b, 19c, 19d, 19e et 19f séparés l'un de l'autre d'un angle de 30° par rapport à l'axe A.

Bien entendu, des capteurs de mesure supplémentaires régulièrement répartis autour de l'axe A peuvent être ajoutés pour augmenter la précision de la mesure des déformations ou des capteurs de mesure peuvent être supprimés pour simplifier la mise en œuvre du dispositif I.

L'unité de traitement 11 assure le traitement des mesures délivrées par les capteurs de mesure pour fournir, en réponse une indication sur l'état de la nacelle de propulsion.

Elle est en premier lieu dûment programmée pour déterminer la direction et l'amplitude de l'effort qui s'applique sur la partie mobile 12 immergée de la nacelle 10.

Selon un mode de mise en œuvre du dispositif I, la direction et l'amplitude de l'effort sont déterminées en sélectionnant le capteur de mesure qui délivre une valeur extrême.

En effet, lorsque la direction de l'effort appliqué sur la paroi mobile de la nacelle est alignée avec la direction pointée par l'un des capteurs de mesure ou, en d'autres termes, est parallèle à un rayon passant par l'axe A et l'un des capteurs, ce capteur délivre une valeur extrême par rapport aux autres capteurs.

La direction de l'effort est ainsi déterminée par l'unité de traitement 11 à partir de l'identification du capteur fournissant une valeur extrême.

Lorsque l'effort est appliqué selon le même angle que l'angle d'implantation du capteur, la valeur fournie par le capteur est minimale.

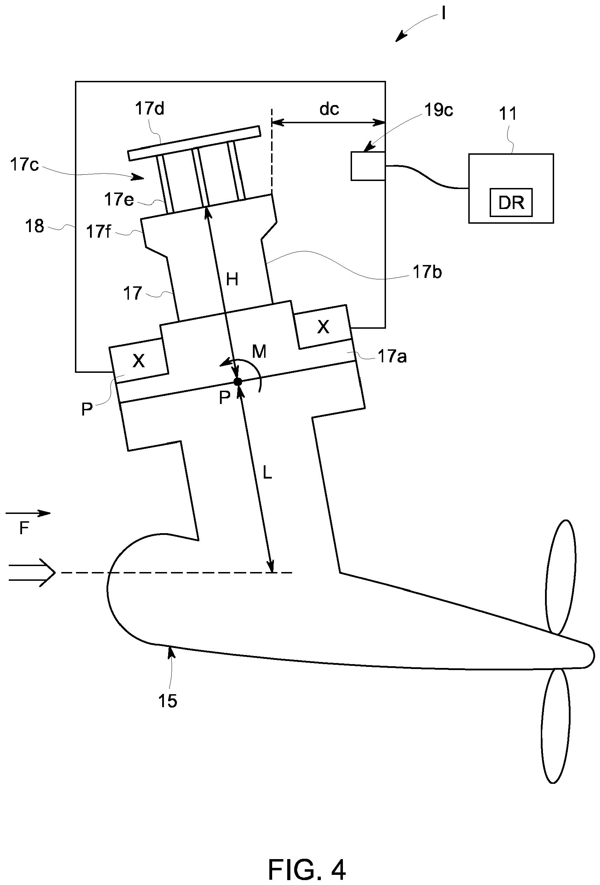

Lorsque l'effort est appliqué selon une direction correspondant à l'angle d'implantation du capteur augmenté de 180°, comme visible sur la figure 4, la valeur de distance mesurée est maximale.

La position du capteur sélectionné indique la direction d'application de l'effort et la valeur mesurée permet de déterminer l'amplitude de l'effort comme cela sera expliqué par la suite.

Si l'effort est appliqué selon un angle différent de celui d'un capteur de mesure, l'unité de traitement 11 sélectionne les deux capteurs de mesure délivrant les valeurs mesurées les plus extrêmes.

La position des capteurs sélectionnés indique la direction d'application de l'effort. Le point d'application de l'effort se situe dans ce cas entre les deux capteurs sélectionnés, et les valeurs mesurées permettent de déterminer l'amplitude de l'effort comme cela sera expliqué par la suite.

Selon un autre mode de mise en œuvre du dispositif I, la direction et l'amplitude de l'effort sont déterminées en identifiant un extremum d'une courbe C1 reliant les valeurs délivrées par les capteurs selon leur position angulaire par rapport à l'axe A à un instant T.

Si aucun effort n'est appliqué, les valeurs de distance mesurée par les capteurs de mesure sont identiques. La courbe C1 est sensiblement une droite horizontale qui ne présente aucun extremum.

Lorsque l'effort est appliqué selon le même angle que l'angle d'implantation d'un capteur, la courbe C1 présente un extremum qui est minimum.

Lorsque l'effort est appliqué selon une direction correspondant à l'angle d'implantation du capteur augmenté de 180°, comme visible sur la figure 4, la courbe C1 présente un extremum qui est un maximum.

La courbe C1 relie la valeur de l'extremum à la position angulaire d'application de l'effort dans le repère R1.

L'unité de traitement 11 échantillonne à chaque instant T les valeurs des capteurs de mesure, détermine la courbe C1, identifie l'extremum et en déduit la direction d'application de l'effort.

La période d'échantillonnage T est par exemple égale à 5 ms.

La valeur de l'extremum permet de déterminer l'amplitude de l'effort comme cela sera expliqué par la suite.

Lorsque la nacelle 10 n'est soumise à aucun choc, la valeur de la distance D est égale à une valeur prédéterminée d, pour chaque capteur de mesure.

L'amplitude de l'effort appliqué sur la partie déformable 12 est déterminée à partir de données stockées en mémoire dans l'unité de traitement 11 sous la forme d'une corrélation entre l'amplitude de l'effort appliqué et la valeur mesurée par chaque capteur de mesure. Cette corrélation correspond à une courbe de réponse DR (figure 2) qui lie la valeur d'un effort en fonction de la valeur mesurée par chaque capteur de mesure.

La courbe de réponse DR peut prendre toute forme, notamment une forme linéaire, polynomiale, parabolique.

Afin d'améliorer la clarté de la détermination de la courbe de réponse DR, on suppose dans ce qui suit que la courbe de réponse DR est de forme linéaire.

Cette droite DR est établie en relevant une valeur de distance mesurée par le capteur de mesure lorsqu'un effort de valeur connue est appliqué sur la partie déformable 12.

Les valeurs connues et mesurées forment chacune un point de la droite DR défini par un couple de valeur de distance et d'effort. Pour déterminer une droite de réponse de forme linéaire, au minimum deux couples de valeurs sont nécessaires.

Le premier couple de valeurs est déterminé en l'absence d'effort appliqué sur la partie déformable 12. On obtient la valeur de distance *d*.

Le second couple de valeurs est déterminé en appliquant un effort selon le même angle qu'un capteur de mesure et d'amplitude connue sur la partie déformable 12.

Ces deux couples de valeurs permettent de déterminer une équation linéaire de la droite de réponse linéaire DR.

L'homme du métier saura adapter le nombre de couples de valeurs nécessaires selon la forme de la courbe.

Comme les capteurs de mesure sont identiques, disposés sur le demi-périmètre du carter cylindrique 18 et comme le diffuseur 17 est cylindrique, la droite DR est identique pour tous les capteurs de mesure.

Ces couples de valeurs sont déterminés par exemple par une modélisation et un calcul par la méthode connue des éléments finis ou par des mesures d'effort et de déplacement réalisées sur la nacelle de propulsion 10 montée sur un banc d'essai.

L'unité traitement 11 associe pour toute valeur mesurée par un capteur de mesure une amplitude de l'effort par extrapolation de la courbe de réponse DR.

L'unité de traitement sélectionne le capteur de mesure présentant la valeur extrême par rapport aux autres valeurs mesurées par les autres capteurs et calcule l'amplitude de l'effort appliqué à partir de la valeur fournie par le capteur de mesure sélectionné et de la courbe de réponse DR.

Si deux capteurs présentent une valeur extrême par rapport aux valeurs mesurées par les autres capteurs, les deux valeurs étant égales à la tolérance près, l'unité de traitement 11 calcule l'amplitude de l'effort appliqué en moyennant les deux amplitudes déterminées à partir des valeurs mesurées par les deux capteurs et de la courbe de réponse DR.

Bien entendu, la précision de la détermination de l'amplitude d'un effort peut être améliorée en déterminant une droite de réponse DR de forme quadratique à partir d'un nombre de couples de valeurs supérieur à deux.

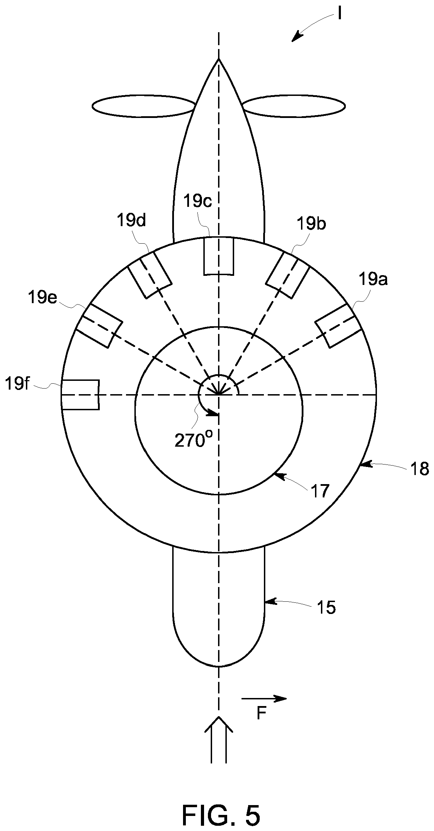

On se réfère aux figures 4 et 5 qui illustrent le dispositif I lorsque la nacelle est soumise à un effort *̅F̅*̅ à un instant Tc. L'effort *̅F̅*̅ est ici orienté à 270° dans le sens trigonométrique par rapport à l'axe (A) et d'amplitude F. L'effort *̅F̅*̅ est appliqué selon le même angle augmenté de 180° selon l'axe (A) que le capteur de mesure 19c. L'effort *̅F̅*̅ est appliqué sur un point d'impact situé à une distance L par rapport à l'extrémité du diffuseur d'air 17 en contact avec la jambe de fixation 16.

Sous l'impact de l'effort *̅F̅*̅, la partie mobile de la nacelle de propulsion 10 se déforme par rapport à la partie fixe. Comme dans la direction du choc les parties mobile 12 et fixe 13 sont solidarisés, l'effort *̅F̅*̅ exerce un moment de torsion M sur la jambe de fixation 16 au point P de l'axe de rotation (A), entre les parties fixes et mobiles, dont la valeur est égale à F*L. La jambe de fixation 16 se déforme sous l'effet du moment M. Plus la distance L est importante, plus la déformation de la jambe de fixation 16 est amplifiée. Le carter 15 amplifie donc sur la longueur L les effets d'un effort appliqué sur la partie déformable 12.

Le diffuseur 17 étant solidaire de la jambe de fixation 16 qui se déforme dans la direction du choc, il se déplace dans le sens contraire du choc *̅F̅*̅, de sorte que le point P constitue un pivot pour la partie déformable soumis à un effort. L'amplitude du déplacement du diffuseur 17 est, comme précédemment expliqué, amplifié en fonction de sa hauteur H.

Les capteurs de mesure 19a, 19b, 19c, 19d, 19e et 19f mesurent le déplacement amplifié par la hauteur H du diffuseur 17.

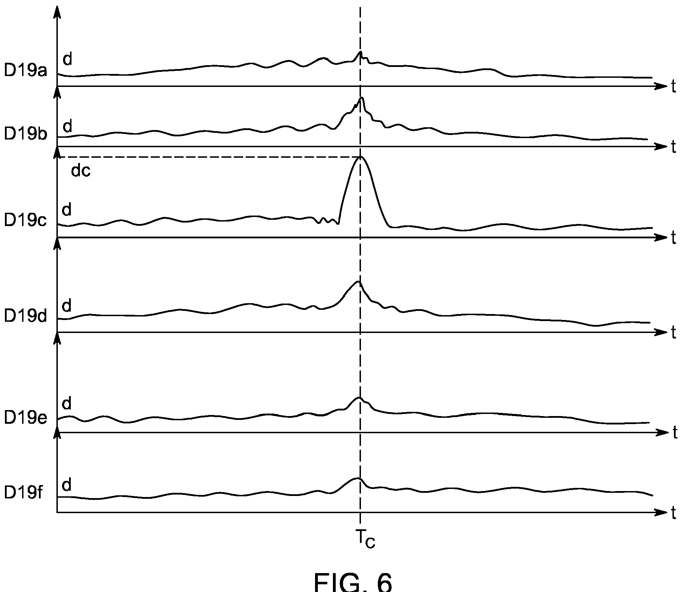

La figure 6 montre l'évolution des distances mesurées par les six capteurs de mesure 19a, 19b, 19c, 19d, 19e et 19f en fonction du temps t. En l'absence de choc, les distances D19a, D19b, D19c, D19d, D19e et D19f mesurées par les sept capteurs sont toutes égales à *d.*

A l'instant Tc du choc, la valeur de la distance D19c mesurée par le capteur 19d, qui coïncide avec la direction de l'effort appliqué à la nacelle, présente un pic d'amplitude *dc.*

Les capteurs 19a, 19b, 19d, 19e et 19f mesurent quant à eux des distances différentes, ici inférieures.

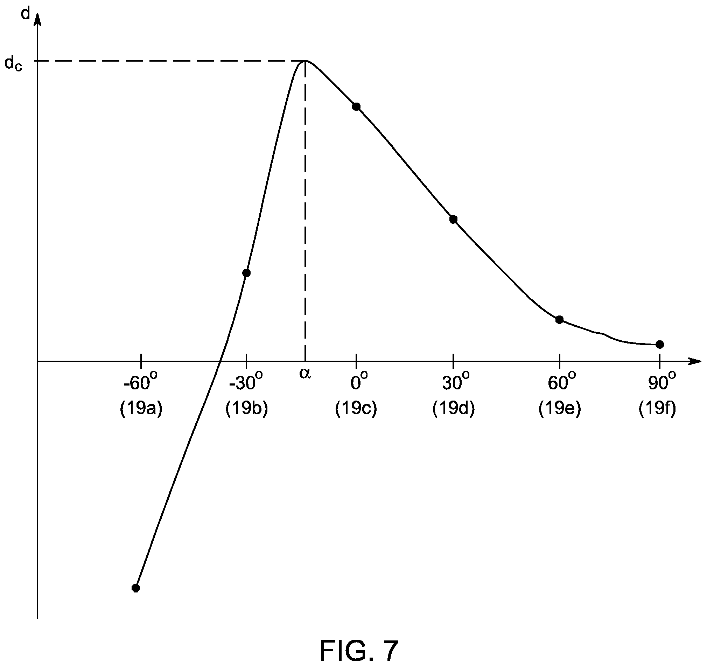

La figure 7 montre l'évolution des distances mesurées par les six capteurs de mesure 19a, 19b, 19c, 19d, 19e et 19f en fonction de leur position angulaire respective à l'instant Tc du choc. Le capteur de mesure 19c est à la position angulaire 0° lorsque le carter mobile 15 est en condition d'opération route libre, c'est-à-dire lorsque la partie mobile 12 est alignée avec la partie fixe 13 tel que représentée à la figure 3.

La courbe C1 présente un maximale d'amplitude *dc* mesurée à la position angulaire α par rapport à l'axe (A) située entre les capteurs 19b et 19c.

L'unité de traitement 11 filtre et détermine à partir des valeurs mesurées les capteurs 19 de mesure et de la courbe de réponse DR déterminée précédemment, selon les pics d'amplitude mesurés, le moment de torsion M, l'amplitude du choc, la direction du choc dans le repère R1 puis projette la direction du choc dans le repère R2.

Selon l'orientation de la nacelle de propulsion 10, les repères R1 et R2 ne coïncident pas.

Les valeurs d'amplitude et de direction du choc dans le repère du bateau et de la nacelle de propulsion sont sauvegardées en mémoire par l'unité de traitement 11 en fonction du temps.

Selon un autre mode de mise en œuvre, l'unité de traitement 11 sauvegarde les caractéristiques d'un choc que si la valeur d'amplitude du choc est supérieure à une valeur prédéfinie, en d'autres termes la valeur de direction du choc et la valeur de l'amplitude correspondante sont mémorisées que si la valeur d'amplitude est supérieure à un seuil. Cette mémorisation sélective des caractéristiques d'un choc permet d'analyser rapidement les chocs endommageant la nacelle 10 pour déterminer quand effectuer les opérations de maintenance.

L'unité de traitement 11 comprend un écran permettant de visualiser les valeurs d'amplitude et de direction du choc en temps réel ainsi que les valeurs sauvegardées.

Les données sauvegardées permettent de reconstituer l'historique des chocs et ainsi planifier les étapes de maintenance préventive de la nacelle de propulsion 10, par exemple en comparant les caractéristiques mesurées et calculées avec des valeurs de seuil.

Avantageusement, le mode de réalisation du procédé décrit détermine la direction et l'amplitude du choc de manière simple, en nécessitant peu de capteurs et une seule étape de calibration de l'organe de mesure.

Ce mode de réalisation peut être aisément transposé à l'étude d'un effort appliquée sur la nacelle de manière non permanente. Il suffit que l'unité de traitement et l'organe de mesure aient une résolution suffisante permettant de détecter une variation d'amplitude lors de l'application d'une force sur la nacelle.

## Revendications

1. Procédé de détermination de la direction et de l'amplitude d'un effort appliqué sur une nacelle de propulsion (10) comprenant une partie fixe (13) et une partie mobile (12) déformable sous l'effet dudit effort, dans lequel :
- on mesure des déformations mécaniques s'appliquant sur la partie mobile sous l'effet dudit effort en mesurant une distance entre la partie fixe et la partie mobile dans la direction d'application de l'effort, et
- on traite les mesures de distance pour déterminer l'amplitude et la direction de l'effort, **caractérisé en ce que** la direction de l'effort est déterminée à partir de la position d'au moins un capteur de mesure délivrant une valeur de mesure extrême par rapport à des valeurs de mesure respectivement fournies par un ensemble de capteurs de mesure répartis angulairement mesurant le déplacement de la partie mobile (12) par rapport à la partie fixe (13).

2. Procédé selon la revendication 1, dans lequel l'amplitude de l'effort est déterminée à partir d'un ensemble de mesures de distance prédéterminées en fonction de valeurs d'effort.

3. Procédé selon la revendication 2, dans lequel les mesures de distance varient linéairement en fonction des valeurs d'effort.

4. Procédé selon l'une des revendications 2 et 3, comprenant en outre une étape de calcul par une méthode d'éléments finis.

5. Procédé selon l'une des revendications 2 et 3, comprenant en outre une étape de mesures d'effort et de déplacement réalisées sur un banc d'essai.

6. Dispositif de détermination de la direction et de l'amplitude d'un effort appliqué sur une nacelle de propulsion (10) comprenant une partie fixe (13) et une partie mobile (12) déformable sous l'effet dudit effort, comprenant des moyens de mesure (19) des déformations mécaniques de la partie mobile (12), comprenant des moyens de mesure de distance (19a, 19b, 19c, 19d, 19e, 19f) entre la partie mobile (12) et la partie fixe (13), dans la direction d'application de l'effort et des moyens de traitement (11) aptes à déterminer l'amplitude et la direction de l'effort à partir des mesures délivrées par les moyens de mesure (19), **caractérisé en ce que** les moyens de traitement sont adaptés pour déterminer la direction de l'effort à partir de la position d'au moins un capteur délivrant une valeur de mesure extrême par rapport aux valeurs fournies par les autres capteurs.

7. Dispositif selon la revendication 6, dans lequel les moyens de mesure (19a, 19b, 19c, 19d, 19e, 19f) comprennent un ensemble de capteurs de mesure répartis angulairement autour de la partie mobile (12).

8. Dispositif selon la revendication 7, dans lequel les capteurs de mesure (19a, 19b, 19c, 19d, 19e, 19f) sont montés sur une partie cylindrique des parties fixe (13) et mobile (12).

9. Dispositif selon l'une quelconque des revendications 6 à 8, dans lequel les moyens de traitement (11) comprennent des moyens de mémorisation dans lesquels sont stockées un ensemble de valeurs de mesure de distance prédéterminées en fonction de valeurs d'efforts, les moyens de traitement étant adaptés pour déterminer l'amplitude de l'effort à partir de mesures délivrées par les capteurs.

10. Dispositif selon la revendication 9, dans lequel les moyens de mémorisation mémorisent les valeurs de direction et d'amplitude d'un effort que si la valeur d'amplitude est supérieure à un seuil.

11. Dispositif selon l'une quelconque des revendications 6 à 10, selon lequel les parties déformable (12) et fixe (13) sont de forme cylindrique.

12. Nacelle de propulsion pour bateau comprenant un dispositif de détermination de la direction et de l'amplitude d'un effort sur ladite nacelle (10) selon l'une des revendications 6 à 11.

## Patentansprüche

1. Verfahren zur Bestimmung der Richtung und der Amplitude einer auf eine Antriebsgondel (10) angelegten Kraft, einen feststehenden Teil (13) und einen unter der Wirkung der Kraft verformbaren beweglichen Teil (12) umfassend, wobei:
- mechanische Verformungen, die sich unter der Wirkung der Kraft an dem beweglichen Teil anlegen durch Messen eines Abstandes zwischen dem feststehenden Teil und dem beweglichen Teil in der Anlegerichtung der Kraft gemessen werden, und
- die Abstandsmessungen bearbeitet werden, um die Amplitude und die Richtung der Kraft zu bestimmen, **dadurch gekennzeichnet, dass** die Richtung der Kraft aus der Position mindestens eines Messsensors bestimmt wird, der einen extremen Messwert in Bezug auf Messwerte liefert, die jeweils durch eine Einheit von winkelig verteilten Messsensoren bereitgestellt werden, die die Verschiebung des beweglichen Teils (12) in Bezug auf den feststehenden Teil (13) messen.

2. Verfahren nach Anspruch 1, wobei die Amplitude der Kraft aus einer Einheit von vorbestimmten Abstandsmessungen in Abhängigkeit von den Kraftwerten bestimmt wird.

3. Verfahren nach Anspruch 2, wobei die Abstandsmessungen linear in Abhängigkeit von den Kraftwerten variieren.

4. Verfahren nach einem der Ansprüche 2 und 3, weiter einen Schritt des Berechnens durch eine Methode der finiten Elemente umfassend.

5. Verfahren nach einem der Ansprüche 2 und 3, weiter einen Schritt von Messungen von Kraft und Verschiebung umfassend, die auf einem Prüfstand durchgeführt werden.

6. Vorrichtung zur Bestimmung der Richtung und der Amplitude einer auf eine Antriebsgondel (10) angelegten Kraft, einen feststehenden Teil (13) und einen unter der Wirkung der Kraft verformbaren beweglichen Teil (12) umfassend, die Mittel zum Messen (19) der mechanischen Verformungen des beweglichen Teils (12) umfasst, die Mittel zur Abstandsmessung (19a, 19b, 19c, 19d, 19e, 19f) zwischen dem beweglichen Teil (12) und dem feststehenden Teil (13) in der Anlegerichtung der Kraft, und Bearbeitungsmittel (11) umfasst, die imstande sind, die Amplitude und die Richtung der Kraft aus den durch die Mittel zum Messen (19) gelieferten Messungen zu bestimmen, **dadurch gekennzeichnet, dass** die Bearbeitungsmittel imstande sind, die Richtung der Kraft aus der Position mindestens eines Sensors zu bestimmen, der einen extremen Messwert in Bezug auf die Werte liefert, die von den anderen Sensoren bereitgestellt werden.

7. Vorrichtung nach Anspruch 6, wobei die Mittel zum Messen (19a, 19b, 19c, 19d, 19e, 19f) eine Einheit von Messsensoren umfassen, die winkelig um den beweglichen Teil (12) herum verteilt sind.

8. Vorrichtung nach Anspruch 7, wobei die Messsensoren (19a, 19b, 19c, 19d, 19e, 19f) auf einem zylindrischen Teil des feststehenden (13) und beweglichen (12) Teils montiert sind.

9. Vorrichtung nach einem der Ansprüche 6 bis 8, wobei die Bearbeitungsmittel (11) Speichermittel umfassen, in denen eine Einheit von vorbestimmten Abstandsmesswerten in Abhängigkeit von den Kräftewerten abgelegt ist, wobei die Bearbeitungsmittel angepasst sind, um die Amplitude der Kraft aus Messungen zu bestimmen, die durch die Sensoren geliefert werden.

10. Vorrichtung nach Anspruch 9, wobei die Speichermittel die Richtungs- und Amplitudenwerte einer Kraft nur dann speichern, wenn der Amplitudenwert größer als ein Schwellenwert ist.

11. Vorrichtung nach einem der Ansprüche 6 bis 10, wobei der verformbare (12) und feststehende (13) Teil in zylindrischer Form sind.

12. Antriebsgondel für ein Boot, umfassend eine Vorrichtung zur Bestimmung der Richtung und der Amplitude einer auf die Gondel (10) angelegten Kraft nach einem der Ansprüche 6 bis 11.

## Claims

1. Method for determining the direction and the amplitude of a stress applied to a pod (10) comprising a fixed part (13) and a mobile part (12) deformable under the effect of said stress, wherein:
- mechanical deformations applied onto the mobile part under the effect of said stress are measured by measuring a distance between the fixed part and the mobile part in the direction of application of the stress, and
- the distance measurements are processed to determine the amplitude and the direction of the stress, **characterised in that** the direction of the stress is determined from the position of at least one measurement sensor delivering a measurement value extreme with respect to measurement values respectively provided by a set of angularly distributed measurement sensors measuring the movement of the mobile part (12) with respect to the fixed part (13).

2. Method according to claim 1, wherein the amplitude of the stress is determined from a set of distance measurements predetermined according to stress values.

3. Method according to claim 2, wherein the distance measurements vary linearly based on the stress values.

4. Method according to one of claims 2 and 3, further comprising a step of calculation by a finite element method.

5. Method according to one of claims 2 and 3, further comprising a step of measurements of stress and movement carried out on a test bench.

6. Device for determining the direction and the amplitude of a stress applied to a pod (10) comprising a fixed part (13) and a mobile part (12) deformable under the effect of said stress, comprising means (19) for measuring the mechanical deformations of the mobile part (12), comprising means (19a, 19b, 19c, 19d, 19e, 19f) for measuring the distance between the mobile part (12) and the fixed part (13) in the direction of application of the stress and processing means (11) capable of determining the amplitude and the direction of the stress from the measurements delivered by the measurement means (19), **characterised in that** the processing means are adapted to determine the direction of the stress from the position of at least one sensor delivering a measurement value extreme with respect to the measurement values provided by the other sensors.

7. Device according to claim 6, wherein the measurement means (19a, 19b, 19c, 19d, 19e, 19f) comprise a set of measurement sensors angularly distributed around the mobile part (12).

8. Device according to claim 7, wherein the measurement sensors (19a, 19b, 19c, 19d, 19e, 19f) are mounted on a cylindrical part of the fixed (13) and mobile (12) parts.

9. Device according to any one of claims 6 to 8, wherein the processing means (11) comprise memorisation means having a set of values of distance measurement predetermined based on stress values stored therein, the processing means being adapted to determine the amplitude of the stress from measurements delivered by the sensors.

10. Device according to claim 9, wherein the memorisation means memorise the values of direction and amplitude of a stress only if the amplitude value is greater than a threshold.

11. Device according to any one of claims 6 to 10, whereby the deformable (12) and fixed (13) parts have a cylindrical shape.

12. Pod for a ship comprising a device for determining the direction and the amplitude of a stress on said pod (10) according to one of claims 6 to 11.
